# EUROPEAN PATENT SPECIFICATION

(11) **EP 0 910 854 B1**
(45) Date of publication and mention of the grant of the patent: **17.04.2002**
(21) Application number: 97932081.9
(22) Date of filing: 25.06.1997
(51) Int. Cl.: G21C 17/07, G21C 17/04

(54) **APPARATUS AND METHOD FOR THE LEAK DETECTION OF FISSION PRODUCTS FROM A NUCLEAR FUEL ASSEMBLY FOR A NUCLEAR REACTOR**
VORRICHTUNG UND VERFAHREN ZUR SPALTPRODUKTE-LEKDETEKTION AUS EINEM KERNBRENNSTABÜNDEL FÜR EINEN KERNREAKTOR
APPAREIL ET PROCEDE DE DETECTION DES FUITES DE PRODUITS DE FISSION D' UN ASSEMBLAGE DE COMBUSTIBLE NUCLEAIRE DE REACTEUR NUCLEAIRE

(30) Priority: 28.06.1996 SE 9602603
(43) Date of publication of application: 28.04.1999
(73) Proprietor: Westinghouse Atom AB, 721 63 Västeras (SE)
(72) Inventor: COLLIN, Per, S-722 41 Västeras (SE); DELERYD, Roland, S-722 17 Västeras (SE); NORBÄCK, Jan, S-725 95 Västeras (SE)
(74) Representative: Berglund, Stefan
(86) International application number: SE9701142
(87) International publication number: WO9800847

(56) References cited:
- US-A- 5 383 226
- US-A- 5 546 435

## Description

This invention relates to a method and an apparatus for carrying out leak detection of fuel assemblies for nuclear reactors, in particular fuel assemblies for a pressurised-water reactor (PWR).

### BACKGROUND OF THE INVENTION

Leakages which occur in fuel assemblies in nuclear reactors lead to the reactor water and hence the different parts of the primary circuit of the reactor being contaminated with the radioactive fission products. When a contamination of the reactor water has been determined or is suspected to have occurred, it is of the utmost importance that the leakage is located so that leaky fuel assemblies can be replaced. A fuel assembly most often includes several fuel rods.

Identification of leaking assemblies is performed by elevating fuel assemblies individually and investigating if any radioactive fission products are leaking from them.

It is known from the late published US-A-5 546 435 corresponding to US patent application 08/341 153 which is a continuation in part of Ser. No. 977 032, 16.11.1992 corresponding to US-A-5 383 226, to use a substantially vertical hollow telescopic mast open at the bottom to house the fuel assembly to be examined. The mast is positioned over the fuel assembly to be examined in the reactor core. The fuel assembly is drawn up inside the mast. The mast has an internal diameter which is slightly larger than the squaremetric cross-section of a fuel assembly. In order to reduce the water resistance encountered when drawing the fuel assembly into the mast, the wall of the mast may have one or more vertically spaced apertures in it which permit water displaced by the incoming fuel assembly to easily stream out of the mast. A fuel assembly is lifted into the mast to a relatively low ambient pressure position in which the fuel assembly is provided near but below the water surface of water inside the nuclear reactor. This reduction in the pressure exerted on the fuel assembly means that if the casing of the fuel rod in the fuel assembly is not leak-proof then any fluid which is inside the rod will be forced out through the leak The water to be examined for the presence of fission products is extracted from the mast from a position inside the mast above the fuel assembly.

In the case that the mast is provided with apertures, this method, known as "sipping", which extracts the water to be sampled from the top of the inside of the mast leads to a low concentration of fission products. This is due to water containing fission products leaking out through the apertures during lifting of the fuel assembly and water, which dilutes the water containing fission products which leaks out of the fuel assembly, entering through the apertures during extraction of the water for examination.

### OBJECT OF THE INVENTION

An object of the present invention is to provide a fuel leak detector method and apparatus which permits "sipping" to be used on the type of masts provided with apertures.

According to the invention this is accomplished by providing a leak detection device which extracts water from the apertures in the wall of the mast.

### DESCRIPTION OF THE INVENTION

According to the invention an apparatus is disclosed for carrying out leak detection of a fuel assembly especially for a pressurised-water nuclear reactor. The apparatus comprises:
immersed in a fluid, a substantially vertical hollow mast open at the bottom end and with side walls which are pierced by one or more apertures, wherein the mast is intended to house the fuel assembly to be examined; and,
the apparatus further comprises leak detection device having extraction means for extracting fluid through said apertures from inside said mast means.
In a further aspect of the invention a method of using the apparatus to detect leaks is disclosed.

### BRIEF DESCRIPTION OF THE DRAWING

The invention will now be described in more detail with reference to the accompanying drawings, in which:
figure 1 illustrates schematically a first embodiment of a leak detection device according to the invention arranged on a mast means surrounding a fuel assembly;
figure 2 shows in perspective the leak detection device of figure 1;
figure 3 shows in perspective part of a second embodiment of a leak detection device according to the invention;
figure 4 shows in perspective part of a third embodiment of a leak detection device according to the invention; and,
figure 5 shows in perspective part of a fourth embodiment of a leak detection device according to the invention.
figure 6 illustrates schematically a fifth embodiment of a leak detection device according to the invention arranged on a mast means surrounding a fuel assembly

### DESCRIPTION OF THE PREFERRED EMBODIMENTS

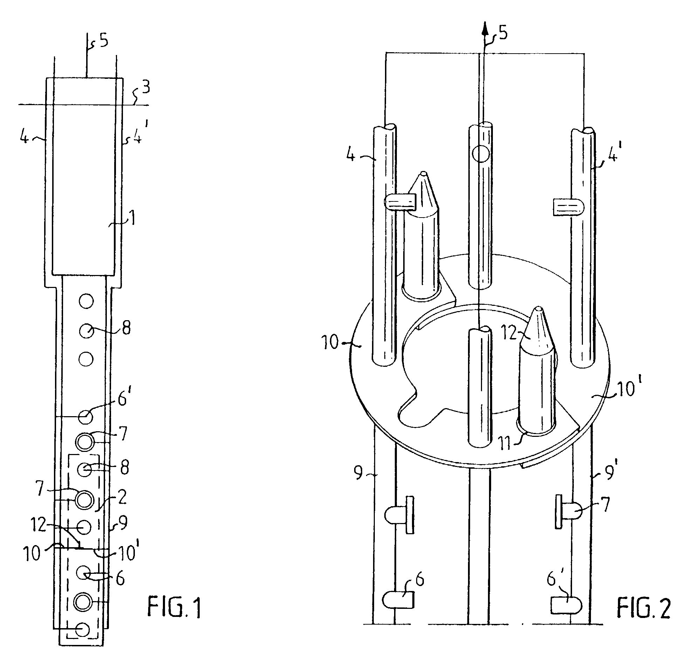

Figure 1 shows a hollow lifting mast means 1 open at the base for elevating fuel assemblies preferably in a pressurised-water reactor. The mast means 1 surrounds a fuel assembly 2 which has been lifted into the mast means. This lifting has been performed by means (not shown) known from the state-of-the-art such as a gripping device provided at the end of a wire provided inside the mast means 1 which is adapted to grip a lifting handle on a fuel assembly 2 in the reactor core and subsequently be drawn into the mast means 1 by a motor. In order to increase the pressure differential between any fluid trapped inside a fuel rod inside the fuel assembly 2 and the ambient pressure the mast means 1 with the fuel assembly 2 can be optionally lifted up in the reactor so that the fuel assembly comes nearer to, but remains below the surface 3 of the water in the reactor. The mast means 1 is surrounded by leak detection device 4, 4' which is connected to pipe means 5 leading to an analysis device (not shown). Leak detection device 4, 4' comprises two co-operating hollow frames 4, 4' which have nozzles 6 and optionally blanking plates 7 mounted on them at vertically spaced distances which correspond to the distances which separates apertures 8 in the side of the mast means. Apertures 8 go all the way through the side of mast means 1 and allow fluid to pass between the interior and exterior of mast means 1. More apertures 8 can be added if necessary. Nozzles 6 and blanking plates 7 are positioned near to, respectively over apertures 8. Blanking plates 7 can cover apertures 8 so that in the event of lateral displacement of the mast fluid is prevented from entering or exiting from any aperture 8 which does not have a nozzle 6 positioned near it. By applying suction to pipe means 5 the fluid inside mast means 1 is sucked via nozzle 6 from apertures 8 into hollow frames 4, 4' to pipe means 5 and subsequently to the analysis device. In this embodiment the fluid extracted from mast means 1 is replaced by fluid flowing in through the bottom of mast means 1 and any uncovered apertures 8 although it is also conceivable to recirculate the extracted fluid back to the mast means (as mentioned below).

Figure 2 shows in more detail the first embodiment of leak detection device 4, 4' which is intended to be fitted around a mast means 1 which is immersed in a reactor. As the upper cross-section of the mast means 1 is greater than the cross-section of the part of the mast which receives fuel assembly 2 for testing it is complicated to produce a leak detection device which can be lowered past this part of the mast means and yet still extend inwardly and correctly position nozzles 6 and blanking plates 7 in relation to apertures 8 in lifting mast means 1. Leak detection device 4, 4' is therefore made of a plurality of parts which can be separately lowered at a distance from the mast means 1 to the required depth and subsequently joined together to perform the examination. In this embodiment leak detection device 4, 4' comprises two frames 4, 4' each comprising hollow pipes 9 joined to a flange 10, 10'. Flanges 10, 10' have the shape of an arc of a circle with an inner diameter greater than the outer diameter of the mast means 1 at the portion of mast means 1 intended to surround a fuel assembly 2 during examination. The flanges 10, 10' each extend through an angle which is more than 180 degrees but which does not extend so far that the open distance between the ends of a flange 10, 10' is less than the outer diameter of the part of the mast means 1 which the flange 10, 10' is intended to partially surround during use. Flange 10 has a guide hole 11 at each end positioned 180 degrees apart and flange 10' has a tapered guide pin 12 at each end positioned 180 degrees apart. Guide pins 12 on flange 10' co-operate with guide holes 11 on flange 10 to form an axially movable locating and joining means for holding the two frames 4, 4' together around mast means 1. This is achieved by frame 4' first being positioned around mast means 1 at a suitable position, frame 4 being positioned vertically above frame 4' and then lowered onto frame 4' so that guide pins 12 locate into guide holes 11 and thereby hold frames 4, 4' together with flange 10 above flange 10'. The vertical and circumferential position of leak detection device 4, 4' can then be adjusted as necessary so that nozzles 6 and blanking plates 7 are correctly positioned by apertures 8.

The invention is not limited to the guide means above and any other suitable guide means could be used, for example:
horizontally orientated guide pins and co-operating holes; or,
mutually attracting permanent magnets or electromagnets.

Furthermore nozzles 6 can be of any appropriate size and it is conceivable that each nozzle 6 covers a plurality of apertures 8 but not necessarily all of them. In the same manner each blanking plate 7, if used, can cover a plurality, but not necessarily all, of apertures 8 which do not have an associated nozzle.

The method of using the apparatus is as follows:
if the apparatus has not been mounted on mast means 1 then it is mounted on mast means 1 in the following manner;
frame 4' is positioned next to one side of mast means 1 so that nozzles 6' and any blanking plates 7' are positioned by apertures 8;
frame 4 is positioned diametrically opposite frame 4' on the other side of mast means 1 with guide holes 11 vertically above guide pins 12;
frame 4 is then lowered onto frame 4' so that guide pins 12 locate into guide holes 11 and thereby hold frames 4, 4' together with flange 10 above flange 10';
the vertical and circumferential position of leak detection device 4, 4' is adjusted as necessary so that nozzles 6, 6' and blanking plates 7, 7' are correctly positioned by apertures 8;
once the apparatus has been mounted on mast means 1 an examination cycle can be started as follows;
if it is necessary to have a background reading of radioactivity in the reactor to determine a base-line before examining fuel assemblies then suction can be applied to nozzles 6, 6' and the fluid in the empty mast means 1 sampled;
the fuel assembly 2 to be examined is grappled and lifted up into mast means 1 - if suction is not already being applied to nozzles 6,6' then it can be applied now so that fluid inside mast means 1 is extracted through nozzles 6, 6' and conducted via pipes 9 and pipe means 5 to an analysis device;
mast means 1 is moved closer to the surface of the water and if necessary moved laterally to a fuel assembly storage position - blanking plates 7, 7' prevent water being forced into the mast means 1 through apertures 8 not associated with nozzles 6, 6' and hence prevents unwanted dilution of any fluid leaking out of fuel rods in fuel assembly 2;
once the analysis of the extracted fluid is complete fuel assembly 2 is lowered out of mast means 1 and a new examination cycle can be commenced.

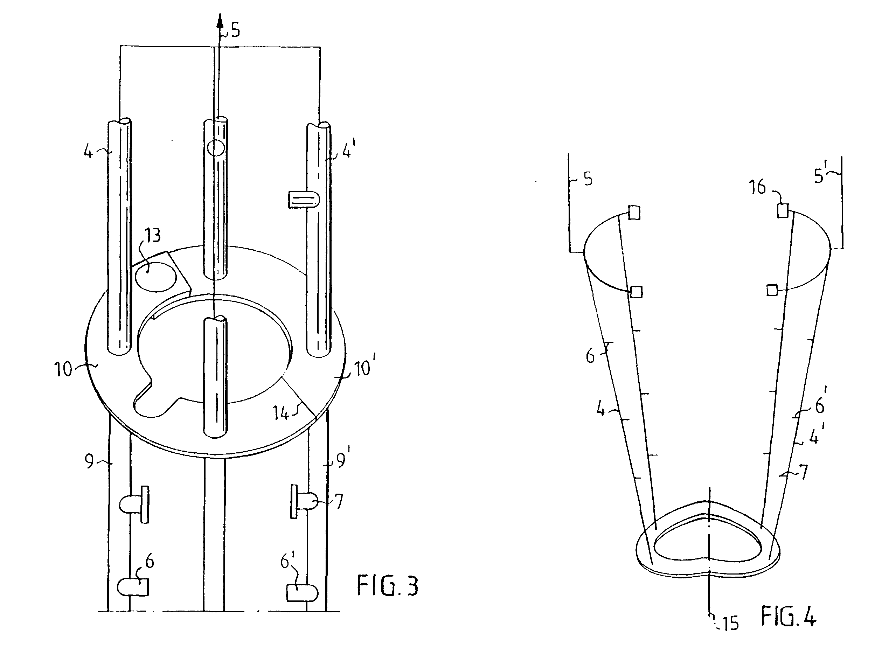

In a second embodiment of the invention shown in figure 3 frames 4, 4' are movably hinged together about a longitudinal axis buy hinge means 13 so that leak detection device 4, 4' can first be opened out so as to pass around mast means 1 and then closed to bring nozzles 6 and blanking plates 7 into position. Lock means 14 can releasably hold frames 4, 4' together.

In a third embodiment of the invention shown in figure 4 frames 4, 4' are hinged together by hinge means 15 at the base about an axis perpendicular to the longitudinal axis of the frames to form a leak detection device which is V-shaped when open, seen from the side. This open leak detection device can be manoeuvred around the mast means 1 and then closed to bring nozzles 6, 6' and blanking plates 7 into position. Lock means 16 can releasably hold frames 4, 4' together.

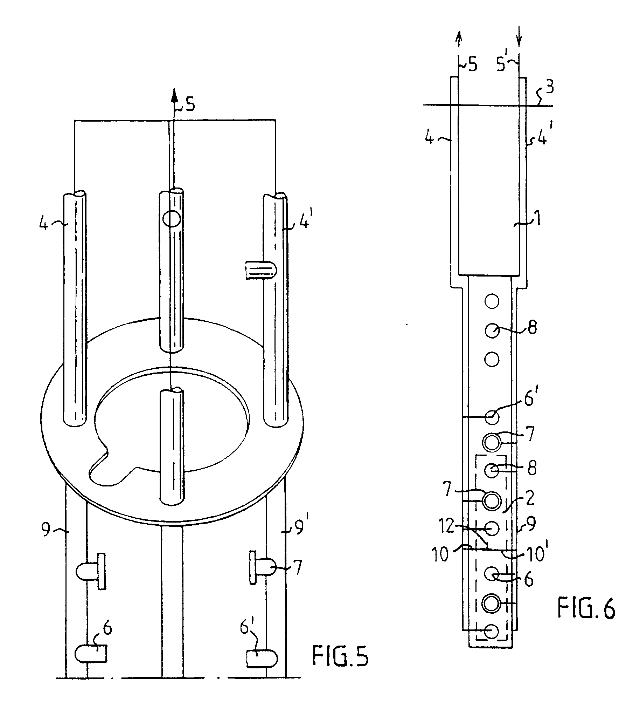

In a fourth embodiment of the invention shown in figure 5 frames 4, 4' are essentially permanently joined together to form a substantially cylindrical apparatus which can be positioned under mast means 1 and lifted into position from below.

In a fifth embodiment of the invention shown in figure 6 frame 4' is connected by pipe 5' to the output of the analysis device. Nozzles 6' on frame 4' can then be used to return the fluid from the analysis device to the mast means for subsequent extraction by nozzles 6 on frame 4 and recirculation through the analysis device. This recirculation of the test fluid through the analysis device maximises the chances that any fission products in the test water are detected.

The method of using the first embodiment of the invention described above can naturally be adapted as necessary for use with all other embodiments of the invention by taking into account the differences between the embodiments.

Furthermore although the apparatus has been described with fuel assemblies being elevated substantially vertically in relation to the mast means and possibly moved in other directions while in the vertical orientation it is also possible to adapt the apparatus and method of the invention to sampling where the fuel assembly is moved substantially horizontally into mast means or other containing means and then possibly moved while in the horizontal orientation. It is furthermore possible to adapt the apparatus and method of the invention to the cases where the fuel assembly is subjected to a combination of vertical and horizontal movements and in which it takes up a variety of orientations.

While the invention has been described with reference to a number of specific embodiments, it is to be understood that the invention is not limited to these embodiments but is to include all modifications and alterations that may be made which fall under the scope of the accompanying claims.

## Claims

1. Apparatus for detecting leaks in a fuel assembly (2) for a nuclear reactor comprising
immersed in a fluid, a substantially vertical hollow mast (1) into which the fuel assembly (2) is housable;
means for drawing the fuel assembly (2) into the mast (1),
**characterised in that** the mast (1) has a side wall having one or more through apertures (8) and the apparatus comprises extraction means (5, 5', 6, 6', 9, 9') for extracting fluid from the mast (1) through at least one of the apertures (8).

2. Apparatus according to claim 1 **characterised in that** said extraction means (5, 5', 6, 6', 9, 9') comprises at least one nozzle (6) wherein said nozzle (6) is adapted to connect to one aperture (8).

3. Apparatus according to claim 1 **characterised in that** said extraction means (5, 5', 6, 6', 9, 9') comprises at least one nozzle (6) adapted to connect to a plurality of apertures (8).

4. Apparatus according to any of claims 1-3 **characterised in that** it comprises blanking means (7) for closing one or more apertures (8).

5. Apparatus according to any of claims 1-4 **characterised in that** said extraction means (5, 5', 6, 6', 9, 9') comprises at least one pipe (9) with a plurality of substantially vertically spaced suction nozzles (6) each adapted to connect with one or more apertures (8)

6. Apparatus according to any of claims 1-5 **characterised in that** said extraction means (5, 5', 6, 6', 9, 9') comprises a frame (4, 4') having an internal diameter which is greater than the external diameter of the lower end of said mast means (1).

7. Apparatus according to any of claims 1-6 **characterised in that** the internal diameter of said frame (4, 4') is less than the external diameter of the widest part of said mast means (1).

8. Apparatus according to any of claims 1-7 **characterised in that** said frame (4, 4') consists of a plurality of sub-frames (4, 4') joinable together to form a frame having an internal diameter which is equal to or greater than the external diameter of the lower end of said mast means (1) and less than the external diameter of the widest part of said mast means (1).

9. Apparatus according to any of claims 1-8 **characterised in that** in an open condition said sub-frames (4, 4') are hinged together by hinge means (13, 15) to form a closed frame (4, 4') having an internal diameter which is equal to or greater than the external diameter of the lower end of said mast means (1) and less than the external diameter of the widest part of said mast means (1), said closed frame (4, 4') being openable to form an open frame with an opening with an internal dimension which is equal to or greater than the external diameter of the part of said mast means (1) intended to accommodate said fuel assembly (2).

10. Apparatus according to any of claims 1-8 **characterised in that** it comprises outlet nozzles (6') for feeding fluid into at least one of said apertures (8).

11. Method for detecting leaks in a fuel assembly (2) for a nuclear reactor comprising :
immersed in a fluid, a substantially vertical hollow mast (1) into which said fuel assembly (2) is housable,
wherein the mast (1) has a side wall having one or more through apertures (8) and further has means for drawing said fuel assembly (2) into the mast (1);
comprising the steps of:
drawing a fuel assembly (2) into said mast means (1),
sampling fluid from said mast means (1).
**characterised by** sampling of the fluid being performed by an apparatus of the type according to any of claims 1-10.

12. Method according to claim 11 **characterised in that** after being sampled the fluid from said mast means (1) is recirculated back into said mast means (1).

## Patentansprüche

1. Apparatur zur Feststellung von Lecks in einem Brennelement (2) für einen Kernreaktor, zu welcher Apparatur gehören:
- Ein im wesentlichen vertikaler hohler Mast (1), der in ein Fluid eingetaucht ist und in dem ein Brennelement (2) unterbringbar ist,
- Vorrichtungen zum Einziehen des Brennelements (2) in den Mast (1),
**dadurch gekennzeichnet, daß** der Mast (1) eine Seitenwand mit einer oder mehreren durchgehenden Öffnungen (8) hat und die Apparatur Absaugvorrichtungen (5,5',6,6',9,9') hat zur Absaugung von Fluid aus dem Mast (1) durch mindestens eine der Öffnungen (8).

2. Apparatur nach Anspruch 1, **dadurch gekennzeichnet, daß** zu der genannten Absaugvorrichtung (5,5',6,6',9,9') mindestens ein Mundstück (6) gehört, wobei das genannte Mundstück so beschaffen ist, daß es an eine Öffnung (8) angeschlossen werden kann.

3. Apparatur nach Anspruch 1, **dadurch gekennzeichnet, daß** zu der genannten Absaugvorrichtung (5,5',6,6',9,9') mindestens ein Mundstück (6) gehört, wobei das genannte Mundstück so beschaffen ist, daß es an mehrere Öffnungen (8) angeschlossen werden kann.

4. Apparatur nach einem der Ansprüche 1 bis 3, **dadurch gekennzeichnet, daß** sie Verschlußvorrichtungen (7) zum Verschließen einer oder mehrerer Öffnungen (8) hat.

5. Apparatur nach einem der Ansprüche 1 bis 4, **dadurch gekennzeichnet, daß** die genannte Absaugvorrichtung (5,5',6,6',9,9') mindestens eine Rohrleitung (9) mit einer Vielzahl von im wesentlichen vertikal beabstandeten Saugmundstücken (6) hat, von denen jedes so beschaffen ist, daß es an eine oder mehrere Öffnungen (8) angeschlossen werden kann.

6. Apparatur nach einem der Ansprüche 1 bis 5, **dadurch gekennzeichnet, daß** zu der genannten Absaugvorrichtung (5,5',6,6',9,9') ein Rahmen (4,4') gehört, der einen inneren Durchmesser hat, der größer ist, als der Außendurchmessers des unteren Endes der genannten Mastvorrichtung (1).

7. Apparatur nach einem der Ansprüche 1 bis 6, **dadurch gekennzeichnet, daß** der Innendurchmesser des genannten Rahmens (4,4') kleiner ist, als der Außendurchmesser des weitesten Teils der genannten Mastvorrichtung (1) ist.

8. Apparatur nach einem der Ansprüche 1 bis 7, **dadurch gekennzeichnet, daß** der genannte Rahmen (4,4') aus einer Mehrzahl von Teilrahmen (4,4') besteht, die miteinander verbindbar sind zur Bildung eines Rahmens, der einen Innendurchmesser hat, der gleich oder größer als der Außendurchmesser des unteren Endes der genannten Mastvorrichtung (1) ist und kleiner als der Außendurchmesser des weitesten Teils der genannten Mastvorrichtung (1) ist.

9. Apparatur nach einem der Ansprüche 1 bis 8, **dadurch gekennzeichnet, daß** die genannten Teilrahmen (4,4') durch Gelenkvorrichtungen (13,15) derart gelenkig miteinander verbunden sind, daß sie einen geschlossenen Rahmen (4,4') bilden, der einen Innendurchmesser hat, der gleich oder größer als der Außendurchmesser des unteren Endes der genannten Mastvorrichtung (1) ist und kleiner als der Außendurchmesser des weitesten Teils der genannten Mastvorrichtung (1) ist, wobei der geschlossene Rahmen (4,4') sich öffnen läßt zu einem offenen Rahmen mit einer Öffnung, die eine innere Abmessung hat, welche gleich oder größer ist als der Außendurchmesser des Teils der genannten Mastvorrichtung (1), der zur Aufnahme des genannten Brennelements (2) bestimmt ist.

10. Apparatur nach einem der Ansprüche 1 bis 8, **dadurch gekennzeichnet, daß** sie Austrittsmundstücke (6') hat, um Fluid in mindestens eine der Öffnungen (8) einzuspeisen.

11. Verfahren zur Feststellung von Lecks in einem Brennelement (2) für einen Kernreaktor, zu welchem Verfahren gehören:
- Ein im wesentlichen vertikaler hohler Mast (1), der in ein Fluid eingetaucht ist und in dem ein Brennelement (2) unterbringbar ist,
- wobei der Mast (1) eine Seitenwand mit einer oder mehreren durchgehenden Öffnungen (8) hat und ferner eine Vorrichtungen hat zum Einziehen des genannten Brennelements (2) in den Mast (1),
- und folgende Schritte:
- Einziehen eines Brennelement (2) in die genannte Mastvorrichtung (1),
- Prüfen von Fluid aus der genannten Mastvorrichtung (1),
**dadurch gekennzeichnet, daß** die Prüfung des Fluids durch eine der Apparaturen nach Art eines der Ansprüche 1 bis 10 erfolgt.

12. Verfahren nach Anspruch 11, **dadurch gekennzeichnet, daß** nach der Prüfung das Fluid aus der genannten Mastvorrichtung in die genannte Mastvorrichtung (1) rezirkuliert wird.

## Revendications

1. Dispositif pour détecter des fuites dans un assemblage combustible (2) pour un réacteur nucléaire comportant un mât (1) creux sensiblement vertical immergé dans un fluide, dans lequel peut être logé l'assemblage combustible (2) ;
des moyens pour tirer l'assemblage combustible (2) dans le mât (1), **caractérisé en ce que** le mât (1) a une paroi latérale ayant une ouverture (8) de traversées ou plus et le dispositif comporte des moyens (5,5',6,6',9,9') d'extraction destinés à extraire du fluide du mât (1) par l'intermédiaire d'au moins l'une des ouvertures (8).

2. Dispositif suivant la revendication 1, **caractérisé en ce que** les moyens (5,5',6,6',9,9') d'extraction comportent au moins une buse (6), la buse (6) étant conçue pour se connecter à une ouverture (8).

3. Dispositif suivant la revendication 1, **caractérisé en ce que** les moyens (5,5',6,6',9,9') d'extraction comportent au moins une buse (6) conçue pour se connecter à une pluralité d'ouvertures (8).

4. Dispositif suivant l'une quelconque des revendications 1 à 3, **caractérisé en ce qu'**il comporte des moyens (7) de recouvrement destinés à fermer une ouverture (8) ou plus.

5. Dispositif suivant l'une quelconque des revendications 1 à 4, **caractérisé en ce que** les moyens (5,5',6,6',9,9') d'extraction comportent au moins un tuyau (9) ayant une pluralité de buses (6) d'aspiration à distance les unes des autres et sensiblement verticales qui sont chacune conçue pour se connecter à une ou plusieurs ouvertures (8).

6. Dispositif suivant l'une quelconque des revendications 1 à 5, **caractérisé en ce que** les moyens (5,5',6,6',9,9') d'extraction comportent un bâti (4,4') ayant un diamètre intérieur qui est supérieur au diamètre extérieur de l'extrémité inférieure des moyens (1) formant mât.

7. Dispositif suivant l'une quelconque des revendications 1 à 6, **caractérisé en ce que** le diamètre intérieur du bâti (4,4') est inférieur au diamètre extérieur de la partie la plus large des moyens (1) formant mât.

8. Dispositif suivant l'une quelconque des revendications 1 à 7, **caractérisé en ce que** le bâti (4,4') est constitué d'une pluralité de sous-bâtis (4,4') qui peuvent être réunis ensemble pour former un bâti ayant un diamètre intérieur qui est égal ou supérieur au diamètre extérieur de l'extrémité inférieure des moyens (1) formant mât et moindre que le diamètre extérieur de la partie la plus large des moyens (1) formant mât.

9. Dispositif suivant l'une quelconque des revendications 1 à 8, **caractérisé en ce que** dans un état ouvert, les sous-bâtis (4,4') sont articulés ensemble par des moyens (13,15) d'articulation pour former un bâti (4,4') fermé ayant un diamètre intérieur qui est égal ou supérieur au diamètre extérieur de l'extrémité inférieure des moyens (1) formant mât et moindre que le diamètre extérieur de la partie la plus large des moyens (1) formant mât, le bâti (4,4') fermé pouvant être ouvert pour former un bâti ouvert avec une ouverture ayant une dimension intérieure qui est égale ou supérieure au diamètre extérieur de la partie des moyens (1) formant mât qui est destinée à recevoir l'assemblage combustible (2).

10. Dispositif suivant l'une quelconque des revendications 1 à 8, **caractérisé en ce qu'**il comporte des buses (6') de sortie pour fournir du fluide dans au moins l'une des dites ouvertures (8).

11. Procédé de détection de fuites dans un assemblage (2) combustible pour un réacteur nucléaire comportant :
un mât (1) creux sensiblement vertical et immergé dans un fluide dans lequel peut être logé l'assemblage combustible (2), le mât (1) ayant une paroi latérale ayant une ouverture (8) de traversées ou plusieurs ouvertures (8) de traversées et comportant en outre des moyens destinés à tirer l'assemblage (2) combustible dans le mât (1) ;
qui comporte les étapes qui consistent à :
tirer un assemblage (2) combustible dans les moyens (1) formant mât,
échantillonner du fluide provenant des moyens (1) formant mât,
**caractérisé en ce que** l'échantillonnage du fluide est effectué par un dispositif du type conforme à l'une quelconque des revendications 1 à 10.

12. Procédé suivant la revendication 11, **caractérisé en ce qu'**après avoir échantillonné le fluide provenant des moyens (1) formant mât, celui-ci est remis en circulation en retour dans les moyens (1) formant mât.
